# EUROPÄISCHE PATENTSCHRIFT

(11) **EP 2 864 193 B1**
(45) Veröffentlichungstag und Bekanntmachung des Hinweises auf die Patenterteilung: **17.07.2019**
(21) Anmeldenummer: 13719869.3
(22) Anmeldetag: 03.05.2013
(51) Int. Cl.: F16J 15/24, B63H 20/02, F16J 15/18, B63H 5/10, B63H 21/30, B63H 5/125

(54) **BOOTSANTRIEB**
BOAT DRIVE
PROPULSEUR DE BATEAU

(30) Priorität: 25.06.2012 DE 102012210727
(43) Veröffentlichungstag der Anmeldung: 29.04.2015
(73) Patentinhaber: ZF Friedrichshafen AG, 88046 Friedrichshafen (DE)
(72) Erfinder: GALLATO, Fernando, I-35010 Padova (IT)
(86) Internationale Anmeldenummer: PCT/EP2013/059201
(87) Internationale Veröffentlichungsnummer: WO 2014/000924

(56) Entgegenhaltungen:
- WO-A1-03/093105
- WO-A1-2005/005249
- DE-A1-102009 000 994
- DE-U- 6 937 931
- FR-A1- 2 369 965
- GB-A- 1 569 661
- GB-A- 2 088 805
- GB-A- 2 483 915
- US-A- 4 543 069
- US-B1- 7 690 959

## Beschreibung

Die Erfindung betrifft eine Dichtungsanordnung für einen schwenkbaren Bootsantrieb nach dem Oberbegriff des Patentanspruches 1. Derartige Bootsantriebe werden auch POD-Antriebe genannt.

Bekannte Innenbord-Bootsantriebe weisen eine unter Wasser angeordnete Steuer- und Vortriebseinheit auf, welche um eine Hochachse schwenkbar ist. Der Vortrieb wird durch eine oder zwei Propeller erzeugt, deren Rotationsachse mittels einer Steuereinheit schwenkbar ist. Durch die Verschwenkbarkeit der Rotationsachse der Propeller wird eine Steuerwirkung für das Boot erreicht. Die Vortriebs- und Steuereinheit weist eine senkrecht angeordnete Säule auf, welche die Antriebswelle für den Propeller aufnimmt und durch eine Öffnung im Bootsrumpf hindurchgeführt ist. Im Bereich der Öffnung ergibt sich ein um die Säule verlaufender Ringspalt, der abhängig von Herstell- und Montagetoleranzen, sowie von Betriebsbedingungen, unterschiedliche und veränderliche Abmessungen aufweist. Dieser Ringspalt muss abgedichtet werden, damit durch den Ringspalt kein Wasser ins Innere des Bootsrumpfes gelangt.

Bei bekannten Bootsantrieben ist die schwenkbare Steuer- und Vortriebseinheit gegenüber der Rumpföffnung beispielsweise durch elastische Ringe abgestützt und abgedichtet. Dabei werden aus dem Propellerschub resultierende Reaktionskräfte durch die elastischen Ringe in den Bootsrumpf übertragen. Beispiele dafür sind in den Dokumenten WO 2012/038305 A1 und DE 2748276 A1 beschrieben. Bei der Anordnung gemäß der DE 2748276 A1 ist der Bootsantrieb über flexible Befestigungsglieder in dem Bootsrumpf befestigt. Die flexible Befestigung des Bootsantriebes im Bootsrumpf hat zur Folge, dass an der genannten Öffnung zwischen der senkrecht angeordneten Säule des Bootsantriebes und dem Öffnungsrand des Bootsrumpfes ein veränderlicher Ringspalt entsteht, der durch eine Dichtungsanordnung zuverlässig abgedichtet werden muss. Darüber hinaus offenbart die DE 10 2009 000 994 A1 eine Dichtungsanordnung, bei der ein Ringspalt durch zwei flexible Dichtelemente überbrückt wird, die beiderseits fest eingespannt sind und eine geschlossene Ringkammer bilden; die Relativbewegungen, die durch die elastische Aufhängung des Bootsantriebs in dem Bootsrumpf zwischen diesen beiden Komponenten entstehen, werden durch die Flexibilität der Dichtelemente ausgeglichen, die sich dazu verformen. Außerdem offenbart die DE 6937931 U einen Bootsantrieb, der mittels eines Fundamentkastens elastisch in einem Bootsrumpf gelagert ist: Ein umlaufender Profilgummi, der fest zwischen zwei Bauteilen eingespannt ist, fungiert dabei als Dichtung und übernimmt gleichzeitig die elastische Lagerung.

Bei den bekannten Dichtungsanordnungen ist es problematisch, dass die elastischen Ringe relativ große Kräfte aufnehmen und übertragen müssen und gleichzeitig einen in seinen Abmessungen veränderlichen Ringspalt zuverlässig abdichten müssen. Deshalb ist bei derartigen Dichtungsanordnungen die Materialauswahl für die Dichtungsringe insbesondere im Hinblick auf deren Elastizität immer ein Kompromiss zwischen den beiden Funktionen Kraftübertragung und Abdichtung. Darüber hinaus unterliegt eine derartige Dichtung einem erhöhten Verschleiß infolge von Relativbewegungen zwischen dem Bootsantrieb und dem Bootsrumpf bzw. zwischen der Dichtung und dem abzudichtenden Bauteil. Dies ist besonders relevant für einen Bootsantrieb, der gegenüber dem Bootsrumpf elastisch aufgehängt ist und daher Schwingungen, insbesondere in vertikaler Richtung ausführt.

Es ist Aufgabe der vorliegenden Erfindung, eine Dichtungsanordnung für einen Bootsantrieb der eingangs genannten Art zu schaffen, die eine dauerfeste, verbesserte Dichtwirkung gewährleistet und trotzdem beispielsweise schwingungsbedingte Horizontal- und Vertikalbewegungen des Bootsantriebes gegenüber dem Bootsrumpf erlaubt.

Die der Erfindung zugrundeliegende Aufgabe wird durch einen Bootsantrieb mit den Merkmalen des Anspruches 1 gelöst. Bevorzugte Ausführungsformen sind in den abhängigen Ansprüchen beansprucht.

Demnach wird ein Bootsantrieb mit einem innerhalb eines Bootsrumpfs angeordneten Antriebsoberteil und einem außerhalb des Bootsrumpfs angeordneten schwenkbaren Antriebsunterteil beansprucht, bei dem der Bootsantrieb unter Ausbildung eines den Bootsantrieb umfangsseitig umgebenden Ringspaltes durch eine bodenseitige Öffnung im Bootsrumpf hindurch geführt ist, und wobei eine Dichtungsanordnung zur Abdichtung des Bootsinnenraumes gegen Wassereintritt im Bereich des Ringspaltes angeordnet ist. Erfindungsgemäß ist die Dichtungsanordnung als Gleitdichtung ausgeführt.

Eine Gleitdichtung ist eine Dichtung, bei der zwei aufeinander gleitende Teile verschiedene Räume gegeneinander abdichten. In diesem Fall wird der Raum innerhalb des Bootsrumpfs vom Raum außerhalb des Bootsrumpfs gegen Wassereintritt abgedichtet.

Die erfindungsgemäße Dichtungsanordnung mit gleitenden Dichtelementen hat gegenüber bekannten Dichtungsanordnung den Vorteil, dass die elastischen Dichtelemente dauernd mit nahezu der gleichen Vorspannung komprimiert werden und durch betriebsbedingte Bewegungen des Bootsantriebs in dem Bootsrumpf nicht wiederholt komprimiert und entlastet werden. Die genannte Vorspannung, mit der die Dichtelemente gegenüber der Dichtlauffläche vorgespannt sind, kann gezielt berechnet und vorbestimmt werden, um dadurch in Kombination mit einer gezielten Materialauswahl für die Dichtelemente eine zuverlässige Abdichtung und eine lange Lebensdauer der Dichtelemente zu erreichen. Vorteilhaft sind die Dichtelemente aus elastischem Material wie beispielsweise Gummi oder elastischem Kunststoff, wie er für bekannte O-Ringe verwendet wird.

Wesentlich für die Funktionsfähigkeit der erfinderischen Dichtungsanordnung ist, dass Relativbewegungen des Bootsantriebes gegenüber dem Bootsrumpf in verschiedenen Richtungen derart ausgeglichen werden, dass eine zuverlässige Abdichtung des Bootsinnenraumes gegen Wassereintritt durch den Ringspalt gewährleistet ist. Dies wird bevorzugt dadurch erreicht, dass die Relativbewegungen durch separate Dichtelemente ausgeglichen werden, die an einer jeweils zugeordneten und in einer bestimmten Richtung ausgerichteten Dichtfläche entlang gleiten. So werden die Relativbewegungen des Bootsantriebes gegenüber dem Bootsrumpf im Ringspalt ausgeglichen. Abhängig von der Bewegungsrichtung der Relativbewegungen können die Dichtflächen beispielsweise auch leicht schräg oder gewölbt, d.h. konkav oder konvex ausgebildet sein.

Um die Relativbewegungen in verschiedenen Richtungen auszugleichen, weist die Dichtungsanordnung bevorzugt zumindest ein erstes Dichtelement und/oder zumindest ein zweites Dichtelement auf, die separat und unabhängig voneinander Bewegungen ausführen können. Das erste Dichtelement gleitet bei Verschiebungen des Bootsantriebes gegenüber dem Bootsrumpf entlang zumindest einer am Bootsantrieb angeordneten ersten Dichtfläche und das zweite Dichtelement gleitet bei Verschiebungen des Bootsantriebes gegenüber dem Bootsrumpf entlang einer am Bootsrumpf angeordneten zweiten Dichtfläche.

Vorzugsweise ist die zumindest eine erste Dichtfläche orthogonal zu der zweiten Dichtfläche angeordnet, wodurch sich Verschiebungen in verschiedenste Richtungen ausgleichen lassen. Dabei liegt die zumindest eine erste Dichtfläche bevorzugt in einer Ebene die im Wesentlichen parallel zu einer Ebene angeordnet ist, in der die bodenseitige Öffnung liegt. Beispielsweise liegt die Öffnung bei einem horizontal ausgerichteten Boden des Bootsrumpfes in einer horizontalen Ebene und dementsprechend ist die erste Dichtfläche parallel zu dieser horizontalen Ebene angeordnet. Ist die Öffnung in einem gegenüber der Wasseroberfläche geneigt ausgerichteten Bereich des Bodens des Bootsrumpfes angeordnet, so ist auch die erste Dichtfläche dementsprechend geneigt ausgerichtet.

Der in dieser Schrift verwendete Begriff horizontal bezieht sich auf den Zustand des mit bestimmungsgemäß eingebautem Bootsantrieb im Wasser aufrecht liegenden Bootes, wobei horizontal im Wesentlichen parallel zur ruhenden Wasseroberfläche bedeutet und vertikal senkrecht, d.h. orthogonal dazu steht.

Die Dichtelemente sind vorzugsweise als elastische Dichtungsringe, insbesondere O-Ringe, ausgebildet. Derartige Dichtungsringe haben sich als zuverlässige Dichtelemente bewährt. Geeignete Materialien, wie beispielsweise Gummi oder Kunststoffe und deren Eigenschaften für derartige elastische Dichtungsringe sind hinreichend bekannt.

Gemäß einer weiteren bevorzugten Ausführung sind das zumindest eine erste und das zumindest eine zweite Dichtelement an einem gemeinsamen Trägerring angeordnet, wobei der Trägerring verschiebbar in dem Ringspalt angeordnet ist. Der Trägerring ist beispielsweise derart in dem Ringspalt eingebaut, dass er sich bei Verschiebungen des Bootsantriebes gegenüber dem Bootsrumpf in der Ebene der bodenseitigen Öffnung an der Innenfläche der Öffnung abstützt und sich gegenüber dem Bootsantrieb verschiebt. Bei Verschiebungen des Bootsantriebes im Bootsrumpf die orthogonal zu der Ebene der Öffnung stattfinden, bewegt sich der Trägerring mit dem Bootsantrieb und verschiebt sich gegenüber dem Bootsrumpf.

Vorzugsweise weist die Dichtungsanordnung jeweils genau zwei erste und zwei zweite Dichtelemente auf. Es hat sich gezeigt, dass mit jeweils zwei Dichtelementen für jede Richtung eine zuverlässige und dauerfeste Abdichtung des Ringspaltes realisiert werden kann.

Es ist im Rahmen der vorliegenden Erfindung auch denkbar, dass die Dichtelemente einteilig mit dem Trägerring ausgebildet sind. Bei einer derartigen Ausführung der Erfindung weist der Trägerring entsprechende Ausformungen auf, die als Dichtelemente auf den gegenüberliegenden Dichtflächen entlanggleiten und so die Relativbewegungen zwischen dem Bootsantrieb und dem Bootsrumpf im Ringspalt ausgleichen. Der Trägerring ist vorzugsweise mit Spiel gegenüber dem Außenumfang des Bootsantriebes ausgeführt und zentriert sich bei Relativbewegungen zwischen dem Bootsantrieb und dem Bootsrumpf in dem Ringspalt selbständig.

Vorteilhaft wird die zweite Dichtfläche durch den Innenumfang eines entlang der Öffnung im Bootsrumpf verlaufenden Ringes gebildet wird. Ein solcher Ring kann entweder als separates Bauteil ausgeführt und fest mit dem Bootsrumpf verbunden oder einteilig mit dem Bootsrumpf gefertigt sein. Der Ring kann an seiner als Dichtfläche wirkenden Innenumfangsfläche derart bearbeitet werden, dass die Innenumfangsfläche des Ringes ein geschmeidiges und reibungsarmes Gleiten des Dichtelementes entlang deren Oberfläche erlaubt.

Vorzugsweise wird die Dichtungsanordnung nach außen hin, d.h. zur Wasserseite durch ein zusätzliches, am Bootsantrieb befestigtes Dichtungsteil, insbesondere einen so genannten V-Ring, abdichtet. Ein solches zusätzliches Dichtungsteil schützt die Dichtflächen und die Dichtelemente vor Verschmutzungen von außen, die die einwandfreie Funktion der Dichtungsanordnung beeinträchtigen könnten und erhöht damit die Zuverlässigkeit und die Dauerfestigkeit der Dichtungsanordnung weiter.

Mit einer kreisförmig ausgestalteten Öffnung im Bootsrumpf ist die Erfindung besonders einfach und wirkungsvoll zu realisieren, weil sich dadurch ein zumindest annähernd kreisringförmiger Ringspalt ergibt, der bei Relativbewegungen zwischen dem Bootsantrieb und dem Bootsrumpf zuverlässig durch die beanspruchte Dichtungsanordnung abdichtbar ist. Die kreisringförmige Ausgestaltung der Dichtungsanordnung ermöglicht eine günstigere und einfachere Herstellung und Montage der Einzelteile der Dichtungsanordnung im Vergleich zu andersförmigen Ausführungen.

Die Erfindung sieht vor, dass der Bootsantrieb durch am Antriebsoberteil angeordnete, elastische Befestigungselemente im Bootsrumpf befestigt ist. Die elastischen Befestigungselemente übertragen sowohl die durch das Gewicht des Bootsantriebs entstehenden Gewichtskräfte, als auch die während der Fahrt vom drehenden Propeller erzeugten Antriebskräfte auf den Bootsrumpf. Des Weiteren gleichen die elastischen Befestigungselemente Vibrationen und Stöße eines Antriebsmotors aus und verhindern, dass Vibrationen oder Stöße vom Bootsantrieb auf den Bootsrumpf übertragen werden. Dies erhöht den Fahrkomfort für die Passagiere und reduziert die Lärmentwicklung.

Die elastische Befestigung des Bootsantriebs in dem Bootsrumpf ermöglicht die erwähnten Relativbewegungen zwischen dem Bootsantrieb und dem Bootsrumpf. Die bodenseitige Öffnung im Bootsrumpf wird so dimensioniert, dass die zum übertragen der Kräfte und zum Ausgleich der Vibrationen notwendigen Relativbewegungen zwischen dem Bootsantrieb und dem Bootsrumpf möglich sind. Die durch die Relativbewegungen verursachten Veränderungen des Ringspaltes müssen von der Dichtungsanordnung derart ausgeglichen werden, dass trotz der Relativbewegungen kein Wasser in den Innenraum des Bootsrumpfs eindringt.

Die vorliegende Erfindung sieht nun bevorzugt vor, dass die Dichtungsanordnung und die Befestigungselemente derart ausgeführt sind, dass alle wesentlichen Kräfte vom Bootsantrieb auf den Bootsrumpf nur über die Befestigungselemente übertragen werden. D.h., die Dichtungsanordnung überträgt keine Kräfte vom Bootsantrieb auf den Bootsrumpf oder umgekehrt, abgesehen von den geringen durch die Gleitreibung zwischen den Dichtelementen und den Dichtflächen verursachten Kräften. Dies wird dadurch erreicht, dass das Spiel, welches für den Trägerring in dem Ringspalt vorgesehen ist, größer ist, als die maximale Verschiebung als Folge der Relativbewegung zwischen dem Bootsantrieb und dem Bootsrumpf. Die maximale Verschiebung hängt wesentlich von der Ausgestaltung der elastischen Befestigungselemente ab, mit denen der Bootsantrieb in dem Bootsrumpf befestigt ist. Daher ist es notwendig, die elastische Befestigung des Bootsantriebes mit der Ausgestaltung der Dichtungsanordnung abzustimmen, um zu erreichen, dass die Dichtungsanordnung keine wesentlichen Kräfte vom Bootsantrieb auf den Bootsrumpf überträgt oder umgekehrt.

Schließlich umfasst die vorliegende Erfindung ein Boot mit einem oben beschriebenen Bootsantrieb.

Die Erfindung wird anhand der nachfolgend beschriebenen und in den Figuren gezeigten Ausführungsform näher beschrieben. Es zeigen
- Fig. 1: den schematischen Aufbau eines erfindungsgemäßen Bootsantriebes in einer Seitenansicht und
- Fig. 2: Ausschnitt eines erfindungsgemäßen Bootsantriebes mit einer vergrößerten Darstellung der Dichtungsanordnung

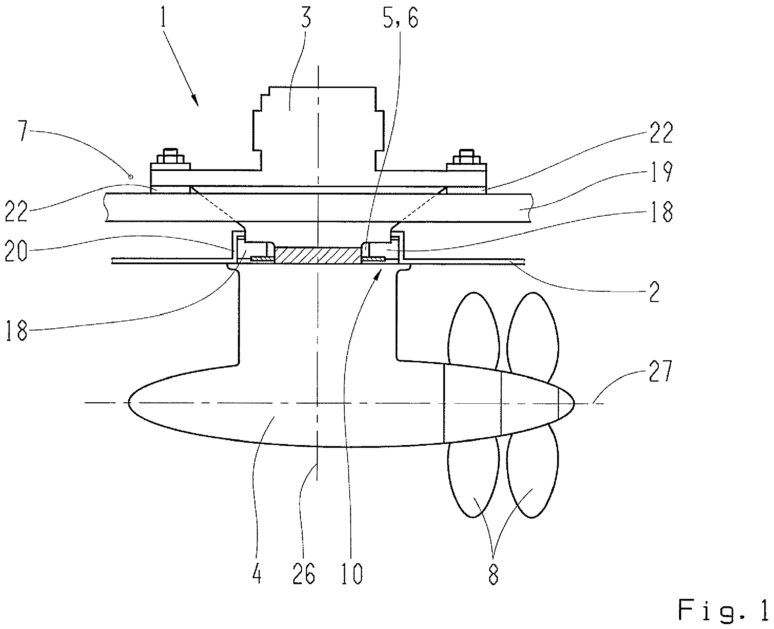

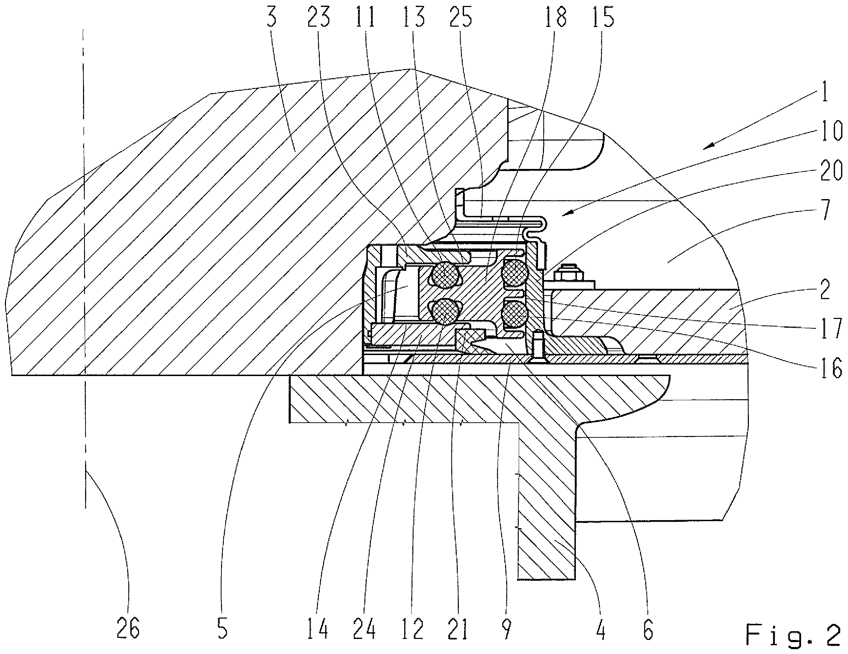

In den Figuren 1 und 2 sind gleiche Elemente mit dem gleichen Bezugszeichen gekennzeichnet.

Der erfindungsgemäße Bootsantrieb 1 umfasst ein innerhalb eines Bootsrumpfs 2 angeordnetes Antriebsoberteil 3 und ein außerhalb des Bootsrumpfs 2 angeordnetes Antriebsunterteil 4. Am Antriebsunterteil 4 umfasst zwei durch den Bootsantrieb 1 antreibbare Propellerschrauben 8, die um die Rotationsachse 27 rotierbar angeordnet sind. Somit ist auch die Fahrtrichtung des Bootes im Wesentlichen entlang der Rotationsachse 27 ausgerichtet. Zum Antreiben der Propellerschrauben 8 sind diese durch nicht dargestellte Antriebswellen und Getriebeelemente antreibbar mit einem im Antriebsoberteil 3 angeordneten Antriebsmotor verbunden. Der Antriebsmotor, die Antriebswellen und die Getriebeelemente sind Teil des Bootsantriebs 1 und im Inneren des Bootsantriebs 1 angeordnet. Das Antriebsunterteil 4 ist um eine Schwenkachse 26 schwenkbar, wodurch das Boot in die gewünschte Richtung steuerbar ist. Ein derartiger Bootsantrieb wird auch POD-Antrieb genannt.

Der gesamte Bootsantrieb 1 mit Antriebsoberteil 3 und Antriebsunterteil 4 erstreckt sich vom Innenraum des Bootsrumpfs 2 durch den Boden des Bootsrumpfs 2. Dazu ist in dem Boden des Bootsrumpfs 2 eine Öffnung 6 vorgesehen. Im Bereich der Öffnung 6 ergibt sich um den Bootsantrieb 1 ein Ringspalt 5. In diesem Ringspalt 5 ist eine als Gleitdichtung ausgeführte Dichtungsanordnung 10 angeordnet. In diesem Ausführungsbeispiel sind sowohl die Öffnung 6, als auch die wesentlichen Teile der Dichtungsanordnung 10 kreisförmig bzw. kreisringförmig ausgebildet, was eine einfache Herstellung und zuverlässige Funktion der Dichtungsanordnung begünstigt.

Die Dichtungsanordnung 10 besteht im Wesentlichen aus einem Trägerring 18, an dem Trägerring befestigten ersten und zweiten Dichtelementen 11, 12, 15, 16 sowie ersten und zweiten Dichtflächen 13, 14, 17, die mit den Dichtelementen 11, 12, 15, 16 in gleitendem Kontakt stehen. Dabei ist der Trägerring 18 sowohl gegenüber dem Bootsantrieb 1 als auch gegenüber dem Bootsrumpf 2 beweglich in dem Ringspalt 6 angeordnet.

Bei Bewegungen des Bootsantriebs 1 gegenüber dem Bootsrumpf 2 in Richtung der Rotationsachse 27 bewegt sich der Trägerring 18 mit seinen Dichtelementen 11, 12, 15, 16 beispielsweise gegenüber dem Bootsantrieb 1, wobei die ersten Dichtelemente 11 und 12 entlang der jeweils zugeordneten Dichtfläche 13 bzw. 14 gleiten. Das Gleiche passiert bei Bewegungen des Bootsantriebs 1 gegenüber dem Bootsrumpf 2 die orthogonal zur Rotationsachse 27 und orthogonal zur Schwenkachse 26 gerichtet sind.

Bei Bewegungen des Bootsantriebs 1 gegenüber dem Bootsrumpf 2 in Richtung der Schwenkachse 26 bewegt sich der Trägerring 18 mit seinen Dichtelementen 11, 12, 15, 16 gegenüber dem Bootsrumpf, wobei die zweiten Dichtelemente 15 und 16 entlang der zweiten Dichtfläche 17 gleiten.

In der Regel wird der Bootsantrieb 1 gegenüber dem Bootsrumpf 2 während des Betriebs Bewegungen ausführen, die in mehrere der oben beschriebenen Richtungen gerichtet sind, sodass zeitgleich sowohl die ersten Dichtelemente 11 und 12, als auch die zweiten Dichtelemente 15 und 16 entlang der zugeordneten Dichtfläche 13, 14 bzw. 17 gleiten. Auf diese Weise ergibt sich eine flexible Dichtungsanordnung, bei der die Dichtelemente 11, 12, 15, 16, die in diesem Ausführungsbeispiel als elastische O-Ringe ausgeführt sind, stets mit der gleichen Andrückkraft gegen die zugeordnete Dichtfläche 13, 14 bzw. 17 gedrückt werden. Die Andrückkraft kann im Voraus berechnet und so gestaltet werden, dass sich eine optimale Abdichtung bei maximaler Lebensdauer der Dichtelemente ergibt. Die hohe Lebensdauer der Dichtelemente ergibt sich dadurch, dass die elastischen Dichtelemente nicht wie bei herkömmlichen Dichtungsanordnungen für derartige Anwendungen im Betrieb ständig komprimiert und entlastet sondern unter einer annähernd konstanten Vorspannung stehen.

Bei Bewegungen des Bootsantriebs 1 gegenüber dem Bootsrumpf 2 in Richtung der Rotationsachse 27 und bei Bewegungen des Bootsantriebs 1 gegenüber dem Bootsrumpf 2 die orthogonal zur Rotationsachse 27 und orthogonal zur Schwenkachse 26 gerichtet sind, gleitet das erste Dichtelement 11 entlang einer starr mit dem Antriebsoberteil 3 verbundenen oberen Dichtscheibe 23. Die bearbeitete, glatte Oberfläche der oberen Dichtscheibe 23 bildet eine erste Dichtfläche 13. Gleichzeitig gleitet das andere erste Dichtelement 12 entlang einer starr mit dem Antriebsoberteil 3 verbundenen unteren Dichtscheibe 24. Deren bearbeitete Oberfläche bildet eine weitere erste Dichtfläche 14. Der Trägerring 18 ist durch die ringsum an einem starr mit dem Bootsrumpf 2 verbundenen Ring 20 anliegenden Dichtelemente 15 und 16 gegenüber dem Bootsrumpf 2 zentriert und bewegt sich bei den zuletzt beschriebenen Bewegungen mit dem Bootsrumpf 2. Bei diesen Bewegungen wird der Trägerring 18 zwischen der an dem ersten Dichtelement 11 anliegenden oberen Dichtfläche 13 und der an dem ersten Dichtelement 12 anliegenden unteren Dichtfläche 14 geführt.

Bei Bewegungen des Bootsantriebs 1 gegenüber dem Bootsrumpf 2 in Richtung der Schwenkachse 26 gleiten die zweiten Dichtelemente 15 und 16 entlang der Dichtfläche 17, wobei die zweite Dichtfläche 17 durch die innenliegende Oberfläche des starr mit dem Bootsrumpf 2 verbundenen Ringes 20 gebildet wird. D.h., bei Bewegungen in Richtung der Schwenkachse 26 bewegt sich auch der Trägerring 18 gegenüber dem Bootsrumpf 2 in Richtung der Schwenkachse 26. Der Trägerring 18 wird dabei quasi von den oben an der Dichtscheibe 23 und unten an der Scheibe 24 anliegenden ersten Dichtelementen 11 und 12 mitgenommen.

Gegenüber dem Innenraum des Bootsrumpfs 2 und nach außen, also wasserseitig, werden der Ringspalt 6 und die darin angeordneten Teile der Dichtungsanordnung 10 durch ein flexibles Dichtungselement 25 und einen V-Ring 26 abgeschirmt.

Zum Innenraum des Bootsrumpfs 2 hin wird die Dichtungsanordnung 10 durch ein flexibles Dichtungselement 25 abgedichtet, um die Dichtungsanordnung vor schädlichen Einflüssen aus dem Innenraum des Bootsrumpfs 2 zu schützen. Das Dichtungselement 25 ist auf einer Seite dichtend mit dem Antriebsoberteil 3 und auf der anderen Seite dichtend mit dem starr am Bootsrumpf 2 befestigten Ring 20 verbunden. Das flexible Dichtungselement 25 ist so gestaltet, dass es alle oben beschriebenen Relativbewegungen zwischen dem Bootsantrieb 1 und dem Bootsrumpf 2 ausgleichen kann.

Die Dichtungsanordnung 10 wird nach außen, also wasserseitig, durch einen am Bootsantrieb 2 befestigten V-Ring 21 abgedichtet, um die Dichtungsanordnung vor schädlichen Einflüssen von außen zu schützen. Eine Dichtlippe des V-Ringes 21 schließt den Ringspalt 6 nach außen hin ab, indem die Dichtlippe mit einer starr mit dem Bootsrumpf 2 verbundenen Scheibe 9 in Kontakt steht. Auf diese Weise werden beispielsweise Verschmutzungen vom Inneren der Dichtungsanordnung 10 fern gehalten, die mit Wasser in die Dichtungsanordnung eindringen könnten und die Funktion der Dichtungsanordnung 10 beeinträchtigen würden.

Der gesamte Bootsantrieb 1 ist im Bootsrumpf 2 durch flexible Befestigungselemente 22 befestigt. Die flexiblen Befestigungselemente 22 verbinden das Antriebsoberteil 3 mit Längsträgern 19, die wiederum starr mit dem Bootsrumpf 2 verbunden oder einstückig mit dem Bootsrumpf 2 ausgeführt sind. Dadurch, dass der gesamte Bootsantrieb 1 nur durch die beschriebenen Befestigungselemente 22 im Bootsrumpf 2 befestigt ist, werden alle wesentlichen Kräfte vom Bootsantrieb 1 auf den Bootsrumpf 2 nur über die Befestigungselemente 22 übertragen und die Dichtungsanordnung überträgt keine Kräfte. Die Funktionen Abdichtung und Kraftübertragung zwischen Bootsantrieb und Bootsrumpf sind quasi getrennt. Auf diese Weise ist es möglich, die Dichtungsanordnung 10 als Gleitdichtung zu gestalten und die Lebensdauer der Dichtelemente signifikant zu erhöhen, weil diese keine wesentlichen Kräfte übertragen müssen.

### Bezugszeichen

- 1: Bootsantrieb
- 2: Bootsrumpf
- 3: Antriebsoberteil
- 4: Antriebsunterteil
- 5: Öffnung
- 6: Ringspalt
- 7: Innenraum
- 8: Propellerschraube
- 9: Scheibe
- 10: Dichtungsanordnung
- 11: erstes Dichtelement
- 12: erstes Dichtelement
- 13: erste Dichtfläche
- 14: erste Dichtfläche
- 15: zweites Dichtelement
- 16: zweites Dichtelement
- 17: zweite Dichtfläche
- 18: Trägerring
- 19: Längsträger
- 20: Ring
- 21: V-Ring
- 22: Befestigungselement
- 23: Obere Dichtscheibe
- 24: Untere Dichtscheibe
- 25: Dichtungselement
- 26: Schwenkachse
- 27: Rotationsachse

## Patentansprüche

1. Bootsantrieb (1) mit einem innerhalb eines Bootsrumpfs (2) angeordneten Antriebsoberteil (3) und einem außerhalb des Bootsrumpfs (2) angeordneten schwenkbaren Antriebsunterteil (4), wobei der Bootsantrieb (1) unter Ausbildung eines den Bootsantrieb umfangsseitig umgebenden Ringspaltes (5) durch eine bodenseitige Öffnung (6) im Bootsrumpf (2) hindurchführbar ist, und wobei eine Dichtungsanordnung (10) im Bereich des Ringspaltes (5) angeordnet ist, **dadurch gekennzeichnet, dass** die Dichtungsanordnung (10) als Gleitdichtung ausgeführt ist, und dass der Bootsantrieb (1) durch am Antriebsoberteil (3) angeordnete, elastische Befestigungselemente (22) im Bootsrumpf (2) befestigbar ist.

2. Bootsantrieb (1) nach Anspruch 1, **dadurch gekennzeichnet, dass** die Dichtungsanordnung (10) zumindest ein erstes Dichtelement (11, 12) aufweist, das bei Verschiebungen des Bootsantriebes gegenüber dem Bootsrumpf entlang zumindest einer am Bootsantrieb angeordneten ersten Dichtfläche (13, 14) gleitet.

3. Bootsantrieb (1) nach Anspruch 1 oder 2, **dadurch gekennzeichnet, dass** die Dichtungsanordnung (10) zumindest ein zweites Dichtelement (15, 16) aufweist, das bei Verschiebungen des Bootsantriebes gegenüber dem Bootsrumpf entlang einer am Bootsrumpf angeordneten zweiten Dichtfläche (17) gleitet.

4. Bootsantrieb (1) nach Anspruch 2 oder 3, **dadurch gekennzeichnet, dass** die zumindest eine erste Dichtfläche (13, 14) orthogonal zu der zweiten Dichtfläche (17) angeordnet ist.

5. Bootsantrieb nach einem der Ansprüche 2 bis 4, **dadurch gekennzeichnet, dass** die zumindest eine erste Dichtfläche (13, 14) in einer Ebene liegt, die im Wesentlichen parallel zu einer Ebene angeordnet ist, in der die bodenseitige Öffnung (6) liegt.

6. Bootsantrieb (1) einem der Ansprüche 2 bis 5, **dadurch gekennzeichnet, dass** das erste Dichtelement (11, 12) und/oder das zweite Dichtelement (15, 16) als elastische Dichtungsringe, insbesondere O-Ringe, ausgebildet sind.

7. Bootsantrieb (1) nach einem der Ansprüche 2 bis 6, **dadurch gekennzeichnet, dass** das erste Dichtelement (11, 12) und das zweite Dichtelement (15, 16) an einem gemeinsamen Trägerring (18) angeordnet sind, und dass der Trägerring (18) verschiebbar in dem Ringspalt angeordnet ist.

8. Bootsantrieb (1) nach Anspruch 7, **dadurch gekennzeichnet, dass** das erste Dichtelement (11, 12) und/oder das zweite Dichtelement (15, 16) einteilig mit dem Trägerring (18) ausgebildet sind.

9. Bootsantrieb (1) nach einem der Ansprüche 2 bis 8, **dadurch gekennzeichnet, dass** jeweils zwei erste Dichtelemente (11, 12) und zwei zweite Dichtelemente (15, 16) vorgesehen sind.

10. Bootsantrieb (1) nach einem der Ansprüche 3 bis 9, **dadurch gekennzeichnet, dass** die zweite Dichtfläche (17) durch die Innenumfangsfläche eines entlang der Öffnung (6) im Bootsrumpf (2) verlaufenden Ringes (20) gebildet wird.

11. Bootsantrieb (1) nach einem der vorgenannten Ansprüche, **dadurch gekennzeichnet, dass** ein zusätzliches Dichtungsteil, insbesondere ein V-Ring (21), die Dichtungsanordnung (10) wasserseitig abdichtet.

12. Bootsantrieb (1) nach einem der vorgenannten Ansprüche, **dadurch gekennzeichnet, dass** die Öffnung (6) kreisförmig ausgestaltet ist.

13. Bootsantrieb (1) nach Anspruch 1, **dadurch gekennzeichnet, dass** die Dichtungsanordnung (10) und die Befestigungselemente (22) derart ausgeführt sind, dass Kräfte vom Bootsantrieb (1) auf den Bootsrumpf (2) nur über die Befestigungselemente (22) übertragen werden, abgesehen von Reibungskräften in der Dichtungsanordnung (10).

14. Boot, **gekennzeichnet durch** einen Bootsantrieb (1) nach einem der vorgenannten Ansprüche.

## Claims

1. Boat drive (1) having an upper drive part (3) arranged inside a hull (2) of the boat and a pivotable lower drive part (4) arranged outside the hull (2) of the boat, wherein the boat drive (1) can be led through a bottom opening (6) in the hull (2) of the boat, thereby forming an annular gap (5) circumferentially surrounding the boat drive, and wherein a seal assembly (10) is arranged in the region of the annular gap (5), **characterized in that** the seal assembly (10) is designed as a sliding seal, and **in that** the boat drive (1) can be secured in the hull (2) of the boat by flexible securing elements (22) arranged on the upper drive part (3).

2. Boat drive (1) according to Claim 1, **characterized in that** the seal assembly (10) has at least one first sealing element (11, 12), which slides along at least one first sealing surface (13, 14), arranged on the boat drive, when there are displacements of the boat drive with respect to the hull of the boat.

3. Boat drive (1) according to Claim 1 or 2, **characterized in that** the seal assembly (10) has at least one second sealing element (15, 16), which, slides along a second sealing surface (17), arranged on the hull of the boat, when there are displacements of the boat drive with respect to the hull of the boat.

4. Boat drive (1) according to Claim 2 or 3, **characterized in that** the at least one first sealing surface (13, 14) is arranged orthogonally in relation to the second sealing surface (17).

5. Boat drive according to one of Claims 2 to 4, **characterized in that** the at least one first sealing surface (13, 14) lies in a plane which is arranged substantially parallel to a plane in which the bottom opening (6) lies.

6. Boat drive (1) according to one of Claims 2 to 5, **characterized in that** the first sealing element (11, 12) and/or the second sealing element (15, 16) are formed as flexible sealing rings, in particular O-rings.

7. Boat drive (1) according to one of Claims 2 to 6, **characterized in that** the first sealing element (11, 12) and the second sealing element (15, 16) are arranged on a common support ring (18), and **in that** the support ring (18) is arranged displaceably in the annular gap.

8. Boat drive (1) according to Claim 7, **characterized in that** the first sealing element (11, 12) and/or the second sealing element (15, 16) are formed as one part with the support ring (18).

9. Boat drive (1) according to one of Claims 2 to 8, **characterized in that** two first sealing elements (11, 12) and two second sealing elements (15, 16) are respectively provided.

10. Boat drive (1) according to one of Claims 3 to 9, **characterized in that** the second sealing surface (17) is formed by the inner circumferential surface of a ring (20) running along the opening (6) in the hull (2) of the boat.

11. Boat drive (1) according to one of the preceding claims, **characterized in that** an additional sealing part, in particular a V ring (21), seals off the seal assembly (10) on the water side.

12. Boat drive (1) according to one of the preceding claims, **characterized in that** the opening (6) is of a circular form.

13. Boat drive (1) according to Claim 1, **characterized in that** the seal assembly (10) and the securing elements (22) are designed in such a way that, apart from frictional forces in the seal assembly (10), forces are only transmitted from the boat drive (1) to the hull (2) of the boat by way of the securing elements (22).

14. Boat, **characterized by** a boat drive (1) according to one of the preceding claims.

## Revendications

1. Propulseur de bateau (1) avec une partie supérieure de propulseur (3) disposée à l'intérieur d'une coque de bateau (2) et une partie inférieure de propulseur pivotante (4) disposée à l'extérieur de la coque de bateau (2), dans lequel le propulseur de bateau (1) peut être introduit à travers une ouverture de fond (6) dans la coque de bateau (2) avec formation d'une fente annulaire (5) entourant en périphérie le propulseur de bateau, et dans lequel un agencement d'étanchéité (10) est disposé dans la région de la fente annulaire (5), **caractérisé en ce que** l'agencement d'étanchéité (10) est réalisé sous la forme d'un joint glissant, et **en ce que** le propulseur de bateau (1) peut être fixé dans la coque de bateau (2) au moyen d'éléments de fixation élastiques (22) disposés sur la partie supérieure de propulseur (3).

2. Propulseur de bateau (1) selon la revendication 1, **caractérisé en ce que** l'agencement d'étanchéité (10) présente au moins un premier élément d'étanchéité (11, 12), qui lors de déplacements du propulseur de bateau par rapport à la coque de bateau glisse le long d'au moins une première face d'étanchéité (13, 14) disposée sur le propulseur de bateau.

3. Propulseur de bateau (1) selon une revendication 1 ou 2, **caractérisé en ce que** l'agencement d'étanchéité (10) présente au moins un deuxième élément d'étanchéité (15, 16), qui lors de déplacements du propulseur de bateau par rapport à la coque de bateau glisse le long d'une deuxième face d'étanchéité (17) disposée sur la coque de bateau.

4. Propulseur de bateau (1) selon une revendication 2 ou 3, **caractérisé en ce que** ladite au moins une première face d'étanchéité (13, 14) est disposée orthogonalement à la deuxième face d'étanchéité (17).

5. Propulseur de bateau selon l'une quelconque des revendications 2 à 4, **caractérisé en ce que** ladite au moins une première face d'étanchéité (13, 14) est située dans un plan, qui est disposé essentiellement parallèlement à un plan, dans lequel l'ouverture de fond (6) est située.

6. Propulseur de bateau (1) selon l'une quelconque des revendications 2 à 5, **caractérisé en ce que** le premier élément d'étanchéité (11, 12) et/ou le deuxième élément d'étanchéité (15, 16) sont réalisés sous la forme d'anneaux d'étanchéité élastiques, en particulier de joints toriques.

7. Propulseur de bateau (1) selon l'une quelconque des revendications 2 à 6, **caractérisé en ce que** le premier élément d'étanchéité (11, 12) et le deuxième élément d'étanchéité (15, 16) sont disposés sur un anneau de support commun (18), et **en ce que** l'anneau de support (18) est disposé de façon déplaçable dans la fente annulaire.

8. Propulseur de bateau (1) selon la revendication 7, **caractérisé en ce que** le premier élément d'étanchéité (11, 12) et/ou le deuxième élément d'étanchéité (15, 16) sont réalisés d'une pièce avec l'anneau de support (18).

9. Propulseur de bateau (1) selon l'une quelconque des revendications 2 à 8, **caractérisé en ce qu'**il est prévu respectivement deux premiers éléments d'étanchéité (11, 12) et deux deuxièmes éléments d'étanchéité (15, 16).

10. Propulseur de bateau (1) selon l'une quelconque des revendications 3 à 9, **caractérisé en ce que** la deuxième face d'étanchéité (17) est formée par la surface périphérique intérieure d'un anneau (20) s'étendant le long de l'ouverture (6) dans la coque de bateau (2).

11. Propulseur de bateau (1) selon l'une quelconque des revendications précédentes, **caractérisé en ce qu'**une pièce d'étanchéité supplémentaire, en particulier un joint en V (21), assure l'étanchéité de l'agencement d'étanchéité (10) du côté de l'eau.

12. Propulseur de bateau (1) selon l'une quelconque des revendications précédentes, **caractérisé en ce que** l'ouverture (6) est de forme circulaire.

13. Propulseur de bateau (1) selon la revendication 1, **caractérisé en ce que** l'agencement d'étanchéité (10) et les éléments de fixation (22) sont réalisés de telle manière que des forces ne soient transmises du propulseur de bateau (1) à la coque de bateau (2) que par les éléments de fixation (22), à l'exception de forces de frottement dans l'agencement d'étanchéité (10).

14. Bateau, **caractérisé par** un propulseur de bateau (1) selon l'une quelconque des revendications précédentes.
